# EUROPÄISCHE PATENTSCHRIFT

(11) **EP 2 462 682 B1**
(45) Veröffentlichungstag und Bekanntmachung des Hinweises auf die Patenterteilung: **10.08.2016**
(21) Anmeldenummer: 10730110.3
(22) Anmeldetag: 04.06.2010
(51) Int. Cl.: H02K 3/47, H02K 7/14, F04D 25/06, H02K 21/24

(54) **LUFTSPULENWICKLUNG FÜR HVAC-GEBLÄSE**
AIR-CORE COIL WINDING FOR HVAC BLOWER
ENROULEMENT DE BOBINES À AIR POUR VENTILATION HVAC

(30) Priorität: 04.08.2009 DE 102009028196
(43) Veröffentlichungstag der Anmeldung: 13.06.2012
(73) Patentinhaber: Robert Bosch GmbH, 70442 Stuttgart (DE)
(72) Erfinder: SCHIEL, Andreas, 76593 Gernsbach-Lautenbach (DE); KRAUTH, Wolfgang, 77855 Achern-Sasbachried (DE); LUDWIG, Matthias, 76547 Sinzheim (DE)
(86) Internationale Anmeldenummer: PCT/EP2010/057809
(87) Internationale Veröffentlichungsnummer: WO 2011/015387

(56) Entgegenhaltungen:
- EP-A2- 2 000 675
- DE-A1-102006 014 682
- US-A- 5 394 046
- US-A1- 2003 030 348
- US-A1- 2003 080 635

## Beschreibung

### Stand der Technik

Zum elektrischen Antrieb von Lüfterrädern in HVAC ("Heating, Ventilating and Air Conditioning", zu Deutsch: "Heizung, Lüftung, Klimatechnik") -Anlagen (nachfolgend als Lüftungsanlagen bezeichnet) werden üblicherweise der gewünschten Gebläseleistung entsprechend mechanisch oder elektrisch kommutierte Elektromotoren eingesetzt. Dabei trägt ein Teil des Elektromotors, beispielsweise der Stator, eine Anzahl Spulen, und der andere Teil, beispielsweise der Rotor, eine Anzahl Permanentmagnete. Die beiden Teile sind drehbar gegeneinander gelagert und die Spulen und die Permanentmagnete sind auf unterschiedlichen Seiten eines konzentrischen Ringspalts angeordnet. Die Spulen sind um Kerne herum gewickelt, die integriert mit einem ringförmigen magnetischen Flusselement ausgeführt sind, welches den magnetischen Fluss zwischen den Spulen leitet. In der Praxis wird hierfür ein hohlzylindrisches Flusselement, beispielsweise in Form eines Stapels aus gestanzten Blechteilen, verwendet. Das Flusselement weist radiale Nuten auf, wobei die Windungen einer Spule benachbarte Nuten durchlaufen, so dass der von den Windungen umschlossene Raum durch einen Abschnitt des Flusselements gefüllt ist, der als ferromagnetischer Spulenkern wirkt. Die Spule ist aus einem nicht ferromagnetischen Material gefertigt, beispielsweise Kupferdraht.

Bei einer Drehung des Rotors gegenüber dem Stator liegen einem Permanentmagneten des Rotors abwechselnd ein ferromagnetischer Abschnitt (der Spulenkern) und ein nicht ferromagnetischer Abschnitt (die Spule) des Stators gegenüber. Dadurch werden während der Drehung permanent wechselnde Kräfte zwischen dem Rotor und dem Stator wirksam, wodurch eine Beschleunigung bzw. Abbremsung des Rotors gegenüber dem Stator eintreten kann, die einen gleichmäßigen Lauf des Rotors beeinträchtigt. Die Frequenz der somit bewirkten Gleichlaufschwankung ist von der Drehzahl des Rotors sowie der Anzahl der Spulen des Stators entlang seines Umfangs abhängig. Im Ergebnis kann bei dem geschilderten Lüftermotor im Betrieb ein Geräusch niedriger Bandbreite auftreten, das als Heulen oder Pfeifen wahrgenommen werden kann. Dieses Geräusch kann sich durch die Lüftungsanlage des Kraftfahrzeugs fortpflanzen und von Insassen als unangenehm empfunden werden. Das Geräusch kann auch mit weiteren Schwingungen interagieren, so dass auch beispielsweise Oberwellen, überlagerte Geräusche und Schwebefrequenzen provoziert werden können, die im Innenraum des Kraftfahrzeugs hörbar sind und zu einer erhöhten Geräuschbelastung führen.

DE 10 2006 0.14 682 A1 zeigt eine Saugmaschine für eine Absauganlage im medizinischen Bereich. Die Saugmaschine umfasst einen Elektromotor mit Luftspulen, um über ein Untersetzungsgetriebe eine Vakuumpumpe anzutreiben.

US 5,349,046 zeigt einen Stator für einen elektrischen Motor mit auf dem Umfang verteilten Spulenhalteelementen, auf denen die Spulen derart gewickelt sind, dass sie sich parallel zur Drehachse des Motors erstrecken.

US 2003/0030348 zeigt einen elektrischen Motor mit über den Umfang verteilten Spulen, die als gedruckte Schaltungen ausgeführt sind.

In der Vergangenheit wurde versucht, eine solche Geräuschentwicklung durch Bedämpfen der Anregung oder durch Reduzieren der elektromagnetischen Kräfte entgegenzuwirken. Dies führte jedoch zu Lüftermotoren, die, gemessen an ihrer Leistungsklasse, eine große Masse aufwiesen. Dies ist aus Aspekten der Handhabung, der Produktion und des Ressourcenverbrauchs bei der Herstellung unerwünscht.

### Offenbarung der Erfindung

Der Erfindung liegt daher die Aufgabe zugrunde, einen Lüftermotor anzugeben, der bei geringer Masse einen guten Gleichlauf aufweist, so dass der Lüftermotor wenig Lärm produziert.

Diese Aufgabe wird gelöst durch einen Lüfter mit Lüftermotor nach Anspruch 1. Unteransprüche geben mögliche bzw. zweckmäßige Ausgestaltungen an.

Gemäß einem ersten Aspekt der Erfindung umfasst ein Lüfter für eine Innenraum-Lüftungsanlage eines Kraftfahrzeugs einen Lüftermotor, der ein erstes Teil mit einer Vielzahl radial ausgerichteter Spulen und ein gegenüber dem ersten Teil drehbar gelagertes zweites Teil mit einer Vielzahl radial ausgerichteter Permanentmagnete umfasst, wobei zwischen Spulen des ersten Teils und Permanentmagneten des zweiten Teils ein konzentrischer Ringspalts ausgebildet ist und die Spulen Luftspulen sind.

Durch die Verwendung von Luftspulen wird vermieden, dass ein ferromagnetisches Element eines Teils des Lüftermotors in ein Magnetfeld des anderen Teils des Lüftermotors im Betrieb zyklisch ein- und wieder austritt. Durch eine derartige Wechselwirkung hervorgerufene Gleichlaufschwankungen eines konventionellen Lüftermotors werden nicht hervorgerufen und auf solche Gleichschwankungen zurückzuführende Geräusche entstehen gar nicht erst. Darüber hinaus weisen die kernlosen Luftspulen eine wesentlich geringere Hysterese als um einen ferromagnetischen Kern herum gewickelte Spulen auf.

Der Lüftermotor des Lüfters umfasst ein erstes magnetisches Flusselement zur magnetischen Kopplung der Spulen auf ihrer dem Ringspalt abgewandten Seite. Das erste magnetische Flusselement schließt die magnetischen Feldlinien benachbarter, angesteuerter Spulen und erhöht so eine bewirkbare magnetische Kraft und in der Folge einen Wirkungsgrad des Lüftermotors.

Der Lüftermotor des Lüfters umfasst ferner ein zweites magnetisches Flusselement zur magnetischen Kopplung der Permanentmagnete auf der dem Ringspalt abgewandten Seite. Das zweite magnetische Flusselement dient wie das erste magnetische Flusselement dem Leiten magnetischer Feldlinien und somit letztendlich dem Erhöhen des Wirkungsgrades des Lüftermotors.

Die Windungen der Spulen können in axialer Richtung an dem ersten magnetischen Flusselement anliegen. Auf diese Weise ist zwar eine maximale Windungsanzahl für jede der Spulen begrenzt, da Abschnitte aller Windungen nebeneinander liegen müssen und nur ein begrenzter äußerer Umfang des Flusselements für einen Kontakt mit den Windungen zur Verfügung steht, jedoch befindet sich gleichzeitig jede der Windungen in kleinstmöglichem Abstand zum Ringspalt, der die Windungen von den Permanentmagneten des anderen Teils des Lüftermotors trennt. Diese Ausführungsform kann daher einen Wirkungsgrad des Lüftermotors weiter erhöhen.

Das erste Teil des Lüftermotors des Lüfters kann ein Stator und das zweite Teil ein den Stator umschließender Rotor sein. Ein solcher Lüftermotor ist bekannt als Außenläufer. Auf dem Rotor sind die Permanentmagneten radial außen angebracht, um eine Rotationsmasse des Außenläufers zu maximieren. Auf einen mechanischen Kommutator kann verzichtet werden, da die auf dem Stator angeordneten Spulen unbeweglich bezüglich eines Befestigungselements des Lüftermotors sind, das die elektrischen Anschlüsse des Lüftermotor trägt.

Der Lüfter kann neben dem Lüftermotor ein mit dessen Rotor verbundenes Lüfterrad umfassen. Dabei kann es sich beispielsweise um ein radiales oder axiales Lüfterrad handeln. In einer Ausgestaltung ist das Lüfterrad halbaxial und umfasst sowohl Saugschaufeln zum axialen Ansaugen von Luft als auch Abströmschaufeln zum radialen Abströmen der angesaugten Luft. Ein Ablenkelement leitet die angesaugte Luft zu den Abströmschaufeln und begrenzt gleichzeitig den Strömungsbereich der Luft in einer axialen Richtung. Das Ablenkelement kann radialsymmetrisch konkav ausgebildet sein. Der Lüftermotor mit Außenläufer kann auf der den Schaufeln des Lüfters abgewandten, konkaven Seite des Ablenkelements angeordnet sein, wodurch sich eine besonders gute Ausnutzung des zur Verfügung stehenden Bauraums ergibt. Auf diese Weise kann ein kompakter, insbesondere in axialer Richtung kurz bauender Lüfter realisiert sein.

Der Lüftermotor des Lüfters kann ferner einen Wicklungskörper zur Fixierung des ersten magnetischen Flusselements umfassen. Der Wicklungsträger kann darüber hinaus die Wicklungen von Spulen des Lüftermotors tragen, so dass eine separat handhabbare Stator-Baugruppe entsteht, die kostengünstig hergestellt werden kann.

Der Wicklungskörper kann zwei axial angeordnete Teile umfassen. Beide Teile können beispielsweise so geformt sein, dass sie nach dem axialen Zusammenfügen das erste magnetische Flusselement axial und radial lagern, Nach dem Zusammenfügen kann die Wicklung der Spulen auf den Wicklungskörper aufgebracht werden. Die beiden Teile des Wicklungskörpers können kongruent sein, so dass im Rahmen einer Massenfertigung weitere Produktionskosten eingespart werden können.

Jeder Teil des Wicklungskörpers kann einen Fortsatz zur Fixierung einer Windung einer der Spulen umfassen. Einander in axialer Richtung gegenüberliegende Fortsätze können dazu dienen, mehrere Windungen einer Spule zu lagern. Durch die Windungen werden die beiden Teile des Wicklungskörpers miteinander verbunden und das erste magnetische Flusselement unverrückbar an seinem Platz gehalten.

Schließlich kann der Lüftermotor des Lüfters eine mit den Spulen verbundene Steuerschaltung zur sensorlosen Drehzahlsteuerung auf der Basis einer Erregung der unbestromten Spule umfassen.

Nach einem zweiten Aspekt umfasst ein Kraftfahrzeug eine Innenraum-Lüftungsanlage mit einem Lüfter wie oben ausgeführt.

### Kurze Beschreibung der Figuren

Im Folgenden wird die Erfindung mit Bezug auf die beigefügten Zeichnungen genauer beschrieben, in denen:
- Figur 1 eine schematische Darstellung einer Lüftungsanlage in einem Kraftfahrzeug;
- Figur 2 ein Detail des Lüftermotors aus Figur 1 in einer axialen Perspektive;
- Figur 3 das Detail aus Figur 2 in einer radialen Perspektive; und
- Figur 4 eine seitliche Schnittansicht durch einen Lüftermotor aus Figur 1 darstellt.

Falls nicht anders angegeben sind axiale und radiale Angaben auf eine Drehachse des Lüftermotors bezogen. Gleiche bzw. einander entsprechende Elemente tragen identische Bezugszeichen in allen Figuren.

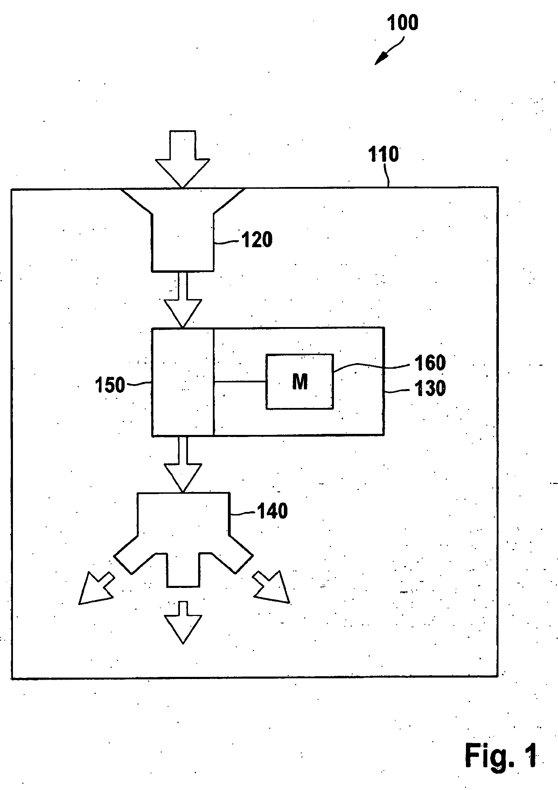

Figur 1 zeigt eine schematische Darstellung einer Innenraum-Lüftungsanlage 100. Ein Kraftfahrzeug 110 umfasst einen Ansaugtrakt 120, einen Lüfter 130 und einen Verteiltrakt 140. Der Lüfter 130 umfasst ein Lüfterrad 150 und einen Lüftermotor 160. In der Darstellung von Figur 1 nicht enthalten sind optionale Elemente der Innenraum-Lüftungsanlage 100, wie Filter, Klappen, Ventile, Wärmetauscher, Kondensatoren und ähnliche, die im vorliegenden Zusammenhang nicht weiter relevant sind. Der Lüftermotor 160 versetzt das Lüfterrad 150 in Drehung, so dass Luft von einer Außenseite des Kraftfahrzeugs 110 durch den Ansaugtrakt 120 in das Lüfterrad 150 eingesogen und anschließend durch den Verteiltrakt 140 in einen Innenraum des Kraftfahrzeugs 140 gefördert wird. Häufig sind der Ansaugtrakt 120 und der Verteiltrakt 140 in einem Trakt integriert ausgeführt.

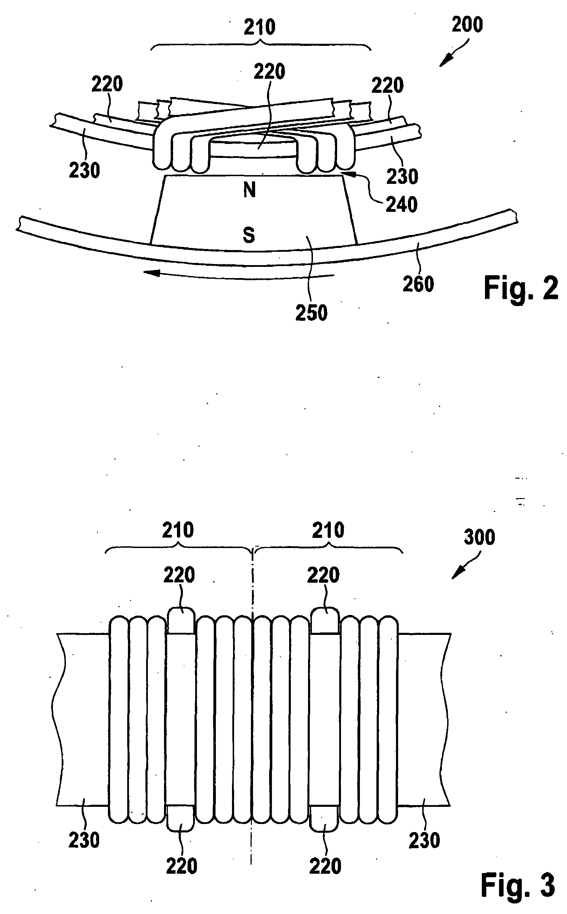

Figur 2 zeigt ein Detail 200 des Lüftermotors 160 aus Figur 1 mit Luftspulen aus einer axialen Perspektive. Eine Spule 210 ist um einen Fortsatz 220 herum gewunden und umfasst drei Windungen, deren axiale Abschnitte parallel zueinander auf einem Umfang um die Drehachse des Lüftermotors 160 liegen. Die sichtbaren Enden jeder Windung sind nicht verbunden dargestellt, um anzudeuten, dass die Windungen in einem beliebigen Schema miteinander, mit anderen Windungeri oder mit elektrischen Anschlüssen der Steuerschaltung 410 verbunden sein können. Auf einer der Drehachse des Lüftermotors 160 zugewandten Seite der Spule 210 erstreckt sich ein erstes konzentrisches magnetisches Flusselement 230, von dem ein Abschnitt dargestellt ist. Das erste magnetische Flusselement 230 weist insgesamt die Form eines Hohlzylinders auf. Das erste magnetische Flusselement 230 kann beispielsweise ein Statorpaket in beliebiger Form sein. Dieses kann beispielsweise ein hohlzylindrisches Massivelement, einen Stapel aus Blechen oder einen spiralförmig gewundenen Flachdraht umfassen. Elemente oder Abschnitte des ersten magnetischen Flusselements können zur weiteren Geräuschvermeidung miteinander verbunden sein, beispielsweise durch Kleben, Schweißen, Nieten, Klemmen oder Schrauben. In der Mitte der Spule 210 verdeckt der Fortsatz 220 das erste magnetische Flusselement 230. Entlang des äußeren Umfangs des ersten magnetischen Flusselements 230 befindet sich zwischen den Windungen der Spule 210 kein Kern; der Innenraum der Spule 210 ist mit Luft gefüllt ("Luftspule").

Durch einen Ringspalt 240 von der Spule 210 getrennt erstreckt sich in radialer Richtung ein Permanentmagnet 250. Das Größenverhältnis der Permanentmagneten 250 zur Spule 210 ist nicht mäßstabsgetreu. Die Zahl der Spulen 210 des Lüftermotors 160 kann von der Zahl der Permanentmagneten 250 abweichen, beispielsweise 12 Spulen 210 und 11 oder 13 Permanentmagnete 250. Der Permanentmagnet 250 ist magnetisch radial ausgerichtet, wobei der magnetische Nordpol wie dargestellt innen oder auch außen liegen kann. Auf seiner dem Ringspalt 240 abgewandten Seite liegt der Permanentmagnet 250 an einen zweiten magnetischen Flusselement 260 an, von dem ein Abschnitt dargestellt ist. Das zweite magnetische Flusselement 260 weist insgesamt eine hohlzylindrische Form auf. Es kann wie das erste magnetische Flusselement 230 aus mehreren Elementen oder aus Vollmaterial bestehen und beispielsweise gerollt, tiefgezogen oder von einem Rohr abgedreht (abgestochen) sein.

Weitere Spulen 210 zu beiden Seiten der dargestellten Spule 210 sowie weitere Permanentmagnete 250 zu beiden Seiten des dargestellten Permanentmagneten 250 sind nicht dargestellt. Benachbarte Elemente können aneinander anliegen und benachbarte Permanentmagneten können einander entgegengesetzte magnetische Ausrichtungen aufweisen.

Figur 3 zeigt eine weitere Detailansicht 300 zweier Spulen 210 aus Figur 2 des Lüftermotor 160 aus Figur 1 in einer radialen Ansicht. Der in Figur 2 dargestellte Permanentmagnet 250 und das zweite magnetische Flusselement 260 sind in Figur 3 nicht dargestellt. Die Spulen 210 sind jeweils um einander gegenüberliegende Fortsätze 220 herum gewunden. Jede der Spulen 210 umfasst drei Windungen, wobei benachbarte Spulen 210 unmittelbar aneinander anschließen. Die axialen Abschnitte der Windungen der Spulen 210 sind parallel zueinander entlang der äußeren Oberfläche des ersten magnetischen Flusselements 230 angeordnet. Der Raum im Inneren jeder Spule 210, der von den jeweils innersten Windungen umschlossen wird, ist mit Luft gefüllt; in anderen Ausgestaltungen kann auch ein anderes magnetisch neutrales Material verwendet werden, beispielsweise ein Kunstharz wie Polyester oder Epoxid.

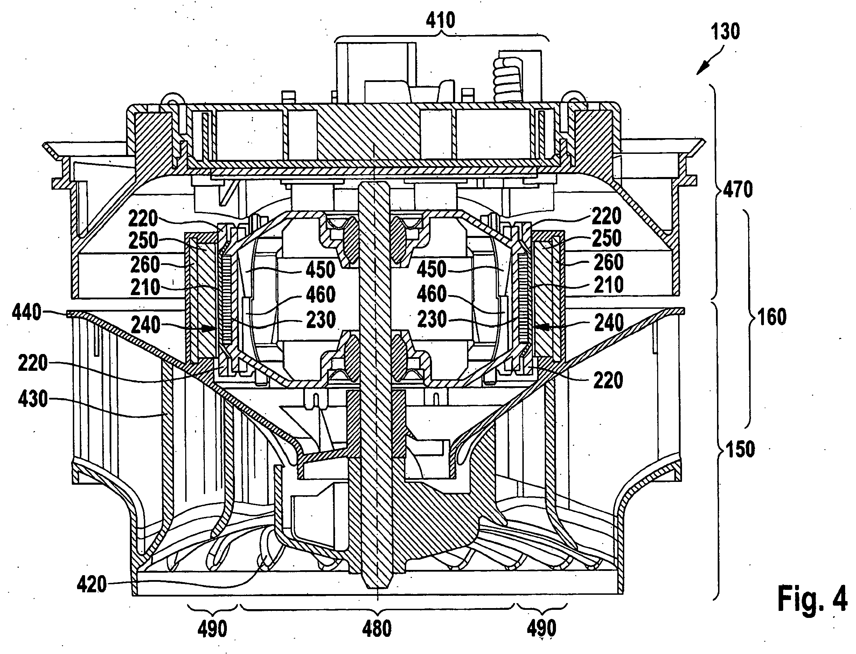

Figur 4 zeigt eine seitliche Schnittansicht des Lüfters 130 aus Figur 1. Der Lüfter 130 umfasst das Lüfterrad 150, den Lüftermotor 160, und einen die Steuerschaltung 410 aufnehmenden Befestigungsflansch 470. Die Steuerschaltung 410 ist dazu ausgelegt, die Spulen 210 im Betrieb in einer bestimmten Abfolge zu aktivieren bzw. deaktivieren, um eine vorbestimmte Drehzahl des Lüftermotor 160 zu bewirken. Die Ist-Drehzahl des Lüftermotors 160 kann bestimmt werden, indem eine Induktionsspannung erfasst wird, die in nicht aktivierten Spulen 210 durch die sich an ihnen vorbei bewegenden Permanentmagneten induziert wird. Da im Stillstand des Lüftermotors 160 keine solche Spannung induziert wird, kann in einer Anlaufphase des Lüftermotors 160 zunächst auf eine Erfassung der Ist-Drehzahl verzichtet und eine vorbestimmte Aktivierungsabfolge der Spulen 210 bewirkt werden, bis der Lüftermotor 160 eine ausreichend große Drehgeschwindigkeit erreicht hat, um eine Drehzahlregelung durchzuführen.

Das Lüfterrad 150 umfasst Saugschaufeln 420 zum axialen Ansaugen von Luft, Abströmschaufeln 430 zum radialen Abströmen der angesaugten Luft, sowie ein Ablenkelement 440 zum Ablenken der angesaugten Luft zu den Abströmschaufeln 430.

Das Ablenkelement 440 ist drehstabil mit den Saugschaufeln 420 und den Abströmschaufeln 430 verbunden. Darüber hinaus trägt das Ablenkelement 440 einen Rotor 490 des Lüftermotors 160 in Form der Permanentmagnete 250 und des zweiten magnetischen Flusselements 260. Ein Stator 480 des Lüftermotors 160 umfasst einen aus einem ersten Teil 450 und einem zweiten Teil 460 aufgebauten Wicklungskörper, der das erste magnetische Flusselement 230 und die Spulen 210 trägt. Jedes der Teile 450, 460 des Wicklungskörpers weist Vorsprünge 220 zur Fixierung der Spulen 210 auf. Zwischen den Spulen 210 und den Permanentmagneten 250 erstreckt sich der Ringspalt 240. Der Befestigungsflänsch 470 lagert den Stator 480 des Lüftermotors 160.

An einem oberen Abschnitt ist der Befestigungsflansch 470 derart ausgeführt, dass er den Lüfter 130 beispielsweise in einer entsprechenden Aussparung einer Wandung eines Lüftungstrakts lagern kann. Der Lüfter 130 kann aus der Aussparung als komplette Einheit in axialer Richtung entnehmbar sein.

Der beschriebene Lüftermotor 160 ist in der Lage, bei einem kleinen bis mittleren Drehmoment einen breiten Drehzahlbereich abzudecken und eignet sich daher besonders für den Einsatz im Lüfter 130. Seine geringe Masse und seine geringe Tendenz zur Erzeugung von Geräuschen qualifizieren den Lüftermotor 160 in besonderer Weise für den Einsatz in der Innenraum-Lüftungsänlage 100 eines Kraftfahrzeugs 110.

Im Vergleich zu einem konventionellen Lüftermotor gleicher Antriebsleistung kann darüber hinaus eine erhebliche Gewichtsersparnis erzielt werden, da es nicht erforderlich ist, die Rotationsmasse des Lüftermotors 160 zum Zweck der Gleichlaufstabilisierung zu erhöhen oder den Lüftermotor 160 zur Vermeidung von Lärm dauerhaft unterhalb seiner bauartbedingten Leistungsfähigkeit zu betreiben. Bei einem Testexemplar eines beschriebenen Lüftermotors 160 konnte ein Gewicht von 400 g erzielt werden, während ein konventioneller Lüftermotor vergleichbarer Abgabeleistung ein Gewicht von 880 g aufwies.

## Patentansprüche

1. Lüfter (130) für eine Innenraum-Lüftungsanlage (100) eines Kraftfahrzeugs (110), mit einem Lüftermotor (160), der
- ein erstes Teil (480) mit einer Vielzahl radial ausgerichteter Luftspulen (210) und
- ein gegenüber dem ersten Teil drehbar gelagertes zweites Teil (490) mit einer Vielzahl radial ausgerichteter Permanentmagnete (250) umfasst;
- wobei zwischen Luftspulen (210) des ersten Teils und Permanentmagneten (250) des zweiten Teils ein konzentrischer Ringspalt (240) ausgebildet ist;
wobei der Lüftermotor (160)
- ein erstes magnetisches Flusselement (230) zur magnetischen Kopplung der Spulen (210) auf ihrer dem Ringspalt (240) abgewandten Seite; und
- ein zweites magnetisches Flusselement (260) zur magnetischen Kopplung der Permanentmagnete (250) auf der dem Ringspalt (240) abgewandten Seite umfasst, wobei
- das erste Teil ein Stator (480) und das zweite Teil ein den Stator (480) umschließender Rotor (490) ist, wobei der Rotor (490) mit einem Lüfterrad (150) verbunden ist,
**dadurch gekennzeichnet, dass**
das Lüfterrad eine Saugschaufel (420) zum axialen Ansaugen von Luft, eine Abströmschaufel (430) zum radialen Abströmen der angesagten Luft sowie ein Ablenkelement (440) zum Ablenken der angesaugt Luft zu den Abströmschaufeln (430) besitzt, wobei der Rotor (490) durch das Ablenkelement (440) in Form der Permanentmagneten (250) und dem zweiten magnetischen Flusselement (260) getragen wird, und wobei ein Wicklungskörper (450, 460) zur axialen und radialen Fixierung des ersten magnetischen Flusselements (230) vorgesehen ist.

2. Lüfter (130) nach Anspruch 1, **dadurch gekennzeichnet, dass** die Windungen der Spulen (210) in radialer Richtung an dem ersten Flusselement (230) anliegen.

3. Lüfter (130) nach Anspruch 1, **dadurch gekennzeichnet, dass** das Lüfterrad (150) einen halbaxialen Aufbau aufweist.

4. Lüfter (130) nach einem der vorangehenden Ansprüche,, **dadurch gekennzeichnet, dass** der Wicklungskörper (450, 460) zwei axial angeordnete Teile (450, 460) umfasst.

5. Lüfter (130) nach Anspruch 4, **dadurch gekennzeichnet, dass** jeder Teil (450, 460) des Wicklungskörpers einen Fortsatz (220) zur Fixierung einer Windung einer der Spulen (210) umfasst.

6. Lüfter (130) nach einem der vorangehenden Ansprüche, **gekennzeichnet durch** eine mit den Spulen (210) verbundene Steuerschaltung (470) zur sensorlosen Drehzahlsteuerung auf der Basis einer Erregung einer unbestromten Spule (210).

7. Kraftfahrzeug (110), umfassend eine Innenraum-Lüftungsanlage (100) mit einem Lüfter (130) nach Anspruch 6.

## Claims

1. Fan (130) for an interior ventilation installation (100) for a motor vehicle (110) having a fan motor (160) which comprises
- a first part (480) having a multiplicity of radially aligned air-cored coils (210)
and
- a second part (490), which is borne such that it can rotate with respect to the first part and has a multiplicity of radially aligned permanent magnets (250);
- with a concentric annular gap (240) being formed between the air-cored coils (210) on the first part and the permanent magnets (250) on the second part, wherein the fan motor (160) has
- a first magnetic flux element (230) for magnetic coupling of the coils (210) on their side facing away from the annular gap (240); and
- a second magnetic flux element (260) for magnetic coupling of the permanent magnets (250) on the side facing away from the annular gap (240), wherein
- the first part is a stator (480) and the second part is a rotor (490), which surrounds the stator (480), wherein the rotor (490) is connected to a fan impellor (150),
**characterized in that** the fan impellor has a suction blade (420) for sucking air in axially, an outlet-flow blade (430) for the air which has been sucked in to flow out radially, and a deflection element (440) for deflecting the air which has been sucked in to the outlet-flow blades (430), wherein the rotor (490) is borne by the deflection element (440) in the form of the permanent magnets (250) and the second magnetic flux element (260), and wherein a winding former (450, 460) for axially and radially fixing the first magnetic flux element (230) is provided.

2. Fan (130) according to Claim 1, **characterized in that** the turns of the coils (210) rest on the first flux element (230) in the radial direction.

3. Fan (130) according to Claim 1, **characterized in that** the fan impellor (150) has a half-axial design.

4. Fan (130) according to one of the preceding claims, **characterized in that** the winding former (450, 460) comprises two axially arranged parts (450, 460).

5. Fan (130) according to claim 4, **characterized in that** each part (450, 460) of the winding former comprises a projection (220) for fixing one turn of one of the coils (210).

6. Fan (130) according to one of the preceding claims, **characterized by** a control circuit (470), which is connected to the coils (210), for rotation-speed control without a sensor, based on excitation of a coil (210) through which no current is flowing.

7. Motor vehicle (110) comprising an interior ventilation installation (100) having a fan (130) according to Claim 6.

## Revendications

1. Ventilateur (130) pour une installation de ventilation d'habitacle (100) d'un véhicule automobile (110) avec un moteur de ventilateur (160) qui comprend
- une première partie (480) avec une pluralité de bobines d'air (210) orientées radialement, et
- une deuxième partie (490) logée de manière à pouvoir tourner opposée à la première partie avec une pluralité d'aimants permanents (250) orientés radialement,
- dans lequel un espace annulaire concentrique (240) est constitué entre les bobines d'air (210) de la première partie et les aimants permanents (250) de la deuxième partie, dans lequel le moteur de ventilateur (160) comprend
- un premier élément de flux (230) magnétique pour le couplage magnétique des bobines (210) sur leur côté opposé à l'espace annulaire (240), et
- un deuxième élément de flux magnétique (260) pour le couplage magnétique des aimants permanents (250) sur le côté opposé à l'espace annulaire (240),
- dans lequel la première partie est un stator (480) et la deuxième partie un rotor (490) entourant le stator (480), dans lequel le rotor (490) est relié avec une roue de ventilateur (150)
**caractérisé en ce que**
la roue de ventilateur possède une pale d'aspiration (420) pour l'aspiration axiale de l'air, une pale d'échappement (430) pour l'échappement radial de l'air aspiré ainsi qu'un élément de déflexion (440) pour détourner l'air aspiré vers les pales de déflexion (430), dans lequel le rotor (490) est porté par l'élément de déflexion (440) sous la forme d'aimants permanents (250) et du deuxième élément de flux magnétique (260) et dans lequel un corps d'enroulement (450, 460) est prévu pour la fixation axiale et radiale du premier élément de flux magnétique (230).

2. Ventilateur (130) selon la revendication 1 **caractérisé en ce que** les enroulements des bobines (210) sont en direction radiale contre le premier élément de flux (230).

3. Ventilateur (130) selon la revendication 1 **caractérisé en ce que** la roue de ventilateur (150) comporte une structure semi-axiale.

4. Ventilateur (130) selon l'une quelconque des revendications précédentes **caractérisé en ce que** le corps d'enroulement (450, 460) comprend deux parties disposées axialement (450, 460).

5. Ventilateur (130) selon la revendication 4 **caractérisé en ce que** chaque partie (450, 460) du corps d'enroulement comprend un prolongement (220) pour fixer un enroulement d'une des bobines (210).

6. Ventilateur (130) selon l'une quelconque des revendications précédentes **caractérisé par** un circuit de commande (470) relié à la bobine (210) pour le pilotage de la vitesse de rotation sans capteur sur la base d'une excitation d'une bobine non alimentée en courant (210).

7. Véhicule automobile (110) comprenant une installation de ventilation d'habitacle (100) avec un ventilateur (130) selon la revendication 6.
